# EUROPÄISCHE PATENTANMELDUNG

(11) **EP 1 108 732 A1**
(43) Veröffentlichungstag der Anmeldung: **20.06.2001**
(21) Anmeldenummer: 00127237.6
(22) Anmeldetag: 15.12.2000
(51) Int. Cl.: C08F 265/04, C08F 279/02, C08L 51/04, C08L 55/02, C08L 25/12

(54) **Verfahren zur Herstellung von thermoplastischen Formmassen**

(30) Priorität: 16.12.1999 DE 19960855
(71) Anmelder: BASF AKTIENGESELLSCHAFT, 67056 Ludwigshafen (DE)
(72) Erfinder: McKee, Graham Edmund, Dr., 67433 Neustadt (DE); Ramsteiner, Falko, Dr., 67065 Ludwigshafen (DE); Breulmann, Michael, Dr., 68163 Mannheim (DE); Barghoorn, Peter, Dr., 67169 Kallstadt (DE); Niessner, Norbert, Dr., 67159 Friedelsheim (DE)
(74) Vertreter: Isenbruck, Günter, Dr.

(57) **Zusammenfassung**

In einem Verfahren zur Herstellung von thermoplastischen Formmassen durch
a) Polymerisieren von Dienen, C₁₋₁₂-Alkylacrylaten oder Gemischen davon, wobei 0 bis 30 Gew.-% dieser Monomere durch weitere copolymerisierbare Monomere und 0 bis 10 Gew.-% dieser Monomere durch vernetzend wirkende Monomere ersetzt sein können, in wäßriger Emulsion zu einem Kautschuk-Latex mit einer Glasübergangstemperatur von weniger als -10°C,
b) mindestens teilweises Agglomerieren des in a) erhaltenen Kautschuk-Latex durch Zugabe einer Dispersion eines Polymers aus 80 bis 100 Gew.-% C₁₋₁₂-Alkylacrylaten und 0 bis 20 Gew.-% wasserlösliche Polymerisate bildenden Comonomeren, wobei 0 bis 50 Gew.-% dieser Monomere durch weitere copolymerisierbare Monomere ersetzt sein können, als Agglomeriermittel,
c) Polymerisieren von 10 bis 90 Gew.-Teilen Styrol, α-Methylstyrol, (meth)acrylnitril, C₁₋₁₂-Alkylacrylat, C₁₋₆-Alkylmethacrylat oder Gemischen davon, wobei bis zu 30 Gew.-% dieser Monomere durch andere, copolymerisierbare Monomere ersetzt sein können, in Gegenwart von 10 bis 90 Gew.-Teilen des in b) erhaltenen agglomerierten Latex, bezogen auf den Feststoff, in wäßriger Emulsion zu einem Pfropfpolymerisat,
wird das Agglomeriermittel durch Polymerisation der in b) genannten Monomere in Gegenwart von 0,001 bis 10 Gew.-% eines Molekulargewichtsreglers, bezogen auf die Menge der in b) genannten Monomere, hergestellt.

## Beschreibung

Die Erfindung betrifft ein Verfahren zur Herstellung von thermoplastischen Formmassen, die kautschukmodifiziert sind.

Bei der Herstellung von unterschiedlichsten Gebrauchsgegenständen und Formteilen kommen kautschukmodifizierte Thermoplaste zum Einsatz. Beispielsweise seien ABS (Acrylnitril-Butadien-Styrol)-Copolymere und ASA (Acrylnitril-Styrol-Acrylat)-Copolymere genannt. In diesen Formmassen werden häufig Kautschukteilchen eingesetzt, die zumindest teilweise agglomeriert wurden.

In der DE-A 24 27 960 sind beispielsweise Verfahren zur Herstellung von schlagfesten thermoplastischen Formmassen beschrieben, bei denen Butadien oder Acrylester zu Kautschukteilchen polymerisiert werden, die sodann durch Zugabe eines Agglomeriermittels auf Basis einer Acrylesterpolymerisat-Dispersion zum Kautschuk-Latex agglomeriert werden. Anschließend wird der agglomerierte Kautschuk-Latex mit Styrol, Acrylnitril, Methylmethacrylat oder deren Gemischen gepfropft und gegebenenfalls in eine Polymermatrix eingearbeitet. Als Agglomeriermittel wird beispielsweise eine wäßrige Dispersion eines Ethylacrylat-Copolymeren eingesetzt, das aus 96 Gew.-% Ethylacrylat und 4 Gew.-% Methacrylamid aufgebaut ist.

Die WO 99/01489 betrifft thermoplastische Formmassen mit geringer Eigenfarbe. Die Formmassen weisen 5 bis 80 Gew.-% eines Pfropfpolymerisats mit bimodaler Teilchengrößenverteilung auf. Die bimodale Teilchengrößenverteilung wird durch teilweise Agglomeration eines Kautschuk-Latex erhalten. Als Agglomeriermittel werden wiederum Dispersionen von Copolymerisaten von vorzugsweise Ethylacrylat mit Methacrylamid eingesetzt. Bei der Herstellung des Pfropfpolymerisats können Molekulargewichtsregler eingesetzt werden, nicht jedoch bei der Herstellung des Agglomeriermittels.

Die bekannten thermoplastischen Formmassen weisen vorteilhafte Eigenschaften für einen Einsatz in vielen Anwendungsgebieten auf. In manchen Anwendungsgebieten werden jedoch noch höhere Zähigkeitswerte gefordert.

Aufgabe der vorliegenden Erfindung ist die Bereitstellung von Verfahren zur Herstellung von thermoplastischen Formmassen, die zu thermoplastischen Formmassen mit verbesserten Zähigkeitswerten führen.

Die Aufgabe wird erfindungsgemäß gelöst durch ein Verfahren zur Herstellung von thermoplastischen Formmassen durch
a) Polymerisieren von Dienen, C₁₋₁₂-Alkylacrylaten oder Gemischen davon, wobei 0 bis 30 Gew.-% dieser Monomere durch weitere copolymerisierbare Monomere und 0 bis 10 Gew.-% dieser Monomere durch vernetzend wirkende Monomere ersetzt sein können, in wäßrigcr Emulsion zu einem Kautschuk-Latex mit einer Glasübergangstemperatur von weniger als-10°C,
b) mindestens teilweises Agglomerieren des in a) erhaltenen Kautschuk-Latex durch Zugabe einer Dispersion eines Polymers aus 80 bis 100 Gew.-% C₁₋₁₂-Alkylacrylaten und 0 bis 20 Gew.-% wasserlösliche Polymerisate bildenden Comonomeren, wobei 0 bis 50 Gew.-% dieser Monomere durch weitere copolymerisierbarc Monomere ersetzt sein können, als Agglomeriermittel,
c) Polymerisieren von 10 bis 90 Gew.-Teilen Styrol, (meth)acrylnitril, α-Methylstyrol, C₁₋₁₂-Alkylacrylat, C₁₋₆-Alkylmethacrylat oder Gemischen davon, wobei bis zu 30 Gew.-% dieser Monomere durch andere, copolymerisierbare Monomere ersetzt sein können, in Gegenwart von 10 bis 90 Gew.-Teilen des in b) erhaltenen agglomerierten Latex, bezogen auf den Feststoff, in wäßriger Emulsion zu einem Pfropfpolymerisat,
wobei das Agglomeriermittel durch Polymerisation der in b) genannten Monomere in Gegenwart von 0,001 bis 10 Gew.-% eines Molekulargewichtsreglers, bezogen auf die Menge der in b) genannten Monomere, hergestellt wird.

Es wurde erfindungsgemäß gefunden, daß durch Verwendung eines Molekulargewichtsreglers bei der Herstellung des Agglomeriermittels die unter Verwendung dieses Agglomeriermittels hergestellten thermoplastischen Formmassen verbesserte mechanische Eigenschaften, insbesondere höhere Zähigkeitswerte aufweisen. Durch den Einbau des erfindungsgemäß eingesetzten Agglomeriermittels in die agglomerierten Kautschukteilchen können diese Kautschukteilchen Deformationsenergien, beispielsweise Schlagenergie besser aufnehmen. Hierdurch werden thermoplastische Formmassen, die diese Kautschukteilchen aufweisen, zäher.

Die mittlere Teilchengröße im Agglomeriermittel beträgt vorzugsweise 0,05 bis 1 µm (Gewichtsmittel), wobei die Teilchengrößenverteilung monodispers bis breit sein kann. Auch Gemische dieser Mittel können eingesetzt werden.

Der zu agglomerierende Latex hat eine mittlere Teilchengröße (Gewichtsmittcl) von vorzugsweise 0,05 bis 1 µm. Besonders bevorzugt ist ein mittlerer Teilchendurchmesser von weniger als 0,3 µm, insbesondere weniger als 0,2 µm. Die Teilchengrößenverteilung kann schmal bis breit sein. Nach der Agglomeration können die Teilchen teilweise oder vollständig agglomeriert sein.

Die nach den Schritten a), b) und c) erhaltenen Pfropfpolymerisate können in einer weiteren Stufe d) in einer Menge von 5 bis 70 Gew.-Teilen mit 30 bis 95

Gew.-Teilen eines Polymerisats aus Styrol, α-Methylstyrol, Methylmethacrylat, (Meth)acrylnitril, Vinylchlorid oder Gemischen davon, wobei bis zu 30 Gew.-% dieser Monomere durch andere, copolymerisierbare Monomere ersetzt sein können, abgemischt werden.

Die einzelnen Stufen werden nachfolgend näher beschrieben.

### Stufe a)

Zunächst wird in der Grundstufe a) ein Kautschuk-Latex auf bekannte Weise hergestellt, beispielsweise wie in DE-A-24 27 960 oder WO 99/01489 beschrieben. Der Grundkautschuk ist durch seine Glastemperatur definiert, die unterhalb von -10°C, vorzugsweise unterhalb von -20°C liegen soll. Als Monomeres wird vorzugsweise Butadien, das bevorzugte Dien, allein verwendet. Da für manche Zwecke Butadien/Acrylestcr-Kautschuke Vorteile zeigen, können auch Monomeren-Gemische aus Butadien und Acrylester eingesetzt werden, die vorzugsweise bis zu 70 Gew.-%, bezogen auf das Gemisch, Acrylester enthalten. Bevorzugt werden Acrylester, die sich von Alkoholen mit 1 bis 8 Kohlenstoffatomen herleiten, wie Ethylacrylat, Butylacrylat oder Ethylhexylacrylat. Die Acrylester können in gleicher Weise auch allein, gegebenenfalls zusammen mit bis zu 10 Gew.-% vernetzend wirkender bifunktioneller Monomere eingesetzt werden. Daraus resultieren dann die witterungsbeständigeren ASA-Polymerisate. Gegebenenfalls können jeweils noch bis zu 30 Gew.-% anderer Comonomere bei der Polymerisation anwesend sein, wie Isopren. Styrol, Acrylnitril oder Vinylether.

Die Polymerisation wird wie üblich in wäßriger Emulsion bei Temperaturen zwischen 30 und 90°C durchgeführt, in Gegenwart von Emulgatoren, wie Alkalisalzen von Alkyl- oder Alkylarylsulfonaten, Alkylsulfaten, Fettalkoholsulfonaten oder Fettsäuren mit 10 bis 30 Kohlenstoffatomen; vorzugsweise verwendet man Salze von Alkylsulfonaten oder Fettsäuren mit 12 bis 18 Kohlenstoffatomen. Die Emulgatoren werden vorzugsweise in Mengen von 0,1 bis 10, insbesondere von 0,5 bis 4,0 Gew.-%, bezogen auf die Monomeren, verwendet. Es werden zudem vorzugsweise die üblichen Puffersalze wie Natriumcarbonat und Natriurnpyrophosphat verwendet. Zusätzlich kann auch ein Schutzkolloid in Kombination mit dem Emulgator verwendet werden. Beispiele für Schutzkolloide sind Polyvinylalkohol und Polyvinylpyrrolidon.

Ebenso werden die üblichen Initiatoren wie Persulfate oder organische Peroxide mit Reduktionsmitteln verwendet, sowie gegebenenfalls Molekulargewichtsregler wie Mercaptane, Terpinole oder dimeres α-Methylstyrol, die am Anfang oder während der Polymerisation zugegeben werden. Das Gewichtsverhältnis von Wasser zu Monomeren liegt vorzugsweise zwischen 4:1 und 3:7.

Weitere Einzelheiten können den bereits zitierten Schriften entnommen werden.

### Stufe b)

In der zweiten Stufe wird der in Stufe a) enthaltene Kautschuk-Latex agglomeriert. Dies geschieht durch Zugabe einer Dispersion eines Acrylesterpolymerisates als Agglomeriermittel. Vorzugsweise werden Dispersionen von Copolymerisaten von 80 bis 99,9 Gew.-% Acrylestern von Alkoholen mit 1 bis 4 Kohlenstoffatomen, vorzugsweise von Methylacrylat oder Ethylacrylat, mit 0,1 bis 20 Gew.-% wasserlösliche Polymerisate bildenden Monomeren, wie Acrylsäure, Methacrylsäure, Acrylamid oder Methacrylamid, N-Methylolmethacrylamid oder N-Vinylpyrrolidon, eingesetzt. Das Agglomeriermittel kann auch weitere Monomere enthalten, bevorzugt in einer Menge bis zu 30 Gew.-%. Beispiele für solche Monomere sind Styrol, Acrylnitril, Diene wie Butadien und Isopren, Derivate von Methacrylsäure wie Methylmethacrylat und 0,1 bis 20, insbesondere 2 bis 15 Gew.-% (Meth)acrylamid und/oder (Meth)acrylsäure. Die Agglomerierdispersion kann gegebenenfalls auch mehrere der genannten Acrylesterpolymerisate enthalten.

Während der Herstellung des Agglomerierlatex wird ein Molekulargewichtsregler verwendet. Beispiele geeigneter Molekulargewichtsregler sind wie vorstehend für die Herstellung der Polybutadiendispersion erwähnt. Bevorzugt werden C₁₋₂₀-Mercaptane, insbesondere t-Dodecylmercaptan und Ethylmercaptan. Die Menge an Regler liegt bei 0,001 bis 10 Gew.-%, bevorzugt 0,1 bis 5 Gew.-%, bezogen auf die Monomeren im Agglomeriermittel (Latex).

Die Konzentration der Acrylesterpolymerisate (Agglomerierlatex) in der Dispersion soll vorzugsweise zwischen 3 und 70 Gew.-% liegen. Bei der Agglomeration werden 0,1 bis 20, vorzugsweise 0,2 bis 5 Gew.-Teile der Agglomerierdispersion auf 100 Teile des Kautschuk-Latex, jeweils berechnet auf Feststoffe, eingesetzt. Die Agglomeration wird durch Zugabe der Agglomerierdispersion zum Kautschuk oder umgekehrt durchgeführt. Selbstverständlich können Kautschuk- und Agglomerierlatex kontinuierlich miteinander gemischt werden. Die Geschwindigkeit der Zugabe ist normalerweise nicht kritisch, im allgemeinen erfolgt sie in etwa 10 Sekunden bis 30 Minuten bei einer Temperatur zwischen 20 und 90°C, vorzugsweise zwischen 30 und 75°C.

### Stufe c)

Der nächste Schritt ist die Pfropfpolymerisation. Diese wird wieder in wäßriger Emulsion unter den üblichen, vorstehend aufgeführten Bedingungen durchgeführt. Es werden vorzugsweise 10 bis 90 Gew.-Teile Styrol, Acrylnitril, Methylmethacrylat oder Gemische von zwei oder allen dreien dieser Monomeren in Gegenwart von 90 bis 10 Gew.-Teilen des Kautschuks, bezogen auf Feststoff, polymerisiert. Die Pfropfhülle kann bis zu 30 Gew.-% andere Monomere enthalten, wie Acrylate und Methacrylate, N-Alkyl- bzw. N-Acrylmaleinimid, z.B. N-Phenylmaleinimid. Vorzugsweise werden zwischen 20 und 50 Gew.-% eines Gemisches von Styrol und Acrylnitril im Gewichtsverhältnis 80:20 bis 65:35 auf 50 bis 80 Gew.-% Kautschuk gepfropft.

### Stufe d)

Dieses Pfropfpolymerisat wird im folgenden als Weichkomponente bezeichnet. Es kann aus der Dispersion nach bekannten Methoden, z.B. durch Zugabe von Elektrolyten, ausgefällt, dann abgetrennt, getrocknet und gegebenenfalls mit einem harten Polymerisat (Hartkomponente) abgemischt werden. Es ist aber auch möglich, Hart- und Weichkomponente in Dispersion zu vermischen, auszufällen und aufzuarbeiten. Eine weitere Möglichkeit besteht darin, die Dispersion der Weichkomponente nur teilweise zu entwässern und als feuchte Krümel in eine Schmelze der Hartkomponente einzuarbeiten, wie es z.B. in der DE-A 2 037 784 beschrieben ist.

Die Hartkomponente kann ein Polymerisat von Styrol, α-Methylstyrol, Methylmethacrylat, Acrylnitril, Methacrylnitril, Vinylchlorid, oder von Gemischen von zwei oder mehreren dieser Monomeren sein. Die Hartkomponente kann auch bis zu 30 Gew.-% andere Monomere enthalten, wie Acrylate, N-Alkyl- bzw. N-Arylmaleinimide, z.B. N-Phenylmaleinimide. Für ABS-Polymerisate wird vorzugsweise ein Copolymerisat von 90 bis 60 Gew.-% Styrol und 10 bis 40 Gew.-% Acrylnitril verwendet. Beim Abmischen liegt das Gewichtsverhältnis Hartkomponente zu Weichkomponente vorzugsweise zwischen 95:5 und 30:70. Der Gehalt der fertigen ABS-Formmasse an Grundkautschuk liegt vorzugsweise zwischen 5 und 30 Gew.-%.

Die erfindungsgemäßen Formmassen zeichnen sich durch eine optimal abgestimmte Kombination von (Schlag)zähigkeit, auch bei tiefen Temperaturen, Oberflächenglanz, Fließfähigkeit und damit thermoplastischer Verarbeitbarkeit aus.

Sie können die üblichen Zusatzstoffe, wie Füllstoffe, weitere Kunststoffe, Stabilisatoren, Antistatika, Weichmacher, Flammschutzmittel, Schmiermittel, Farbstoffe und Pigmente, vorzugsweise in Mengen von insgesamt etwa 30 % ihres Gewichtes, enthalten. Sie können durch Extrusion, Tiefziehen oder Spritzgießen zu Fasern, Folien und Formkörpern verarbeitet werden.

Die Erfindung wird nachstehend anhand von Beispielen näher erläutert.

### Beispiele

### Herstellung der Agglomerierdispersion

Verschiedene Agglomerierlatices wurden mit der Emulsionspolymerisationsfahrweise hergestellt. Die Produkte unterscheiden sich voneinander in der Menge des bei der Herstellung eingesetzten Molekulargewichtsreglers, t-Dodecylmercaptan (t-DDM) (Tabelle 1).
2930 g Wasser, 105 g einer Lösung eines Natriumsalzes der C₁₀₋₁₆-Alkylsulfonsäure in Wasser, 420 g Ethylacrylat und 7,5 g Natriumpersulfat wurden auf 80°C aufgeheizt, und anschließend wurden eine Emulsion aus 2240 g Wasser, 180 g Methacrylamid, 3600 g Ethylacrylat, 95 g einer Lösung eines Natriumsalzes einer C₁₀₋₁₆-Alkylsulfonsäure in Wasser, die in Tabelle 1 genannte Menge an t-DMM und eine Lösung aus 260 g Wasser und 6,5 g Natriumpersulfat über 3 h zugegeben und 2 h nachgerührt.

**Tabelle 1:**

| Zusammensetzung der Agglomerierlatices | | | |
|---|---|---|---|
| | Ethylacrylat [Gew.-%] | Methacrylamid [Gew.-%] | t-DDM [% bez. auf Monomer] |
| A1 | 95,7 | 4,3 | 2 |
| A2 | 95,7 | 4,3 | 1,5 |
| A3 | 95,7 | 4,3 | 1 |
| A4 | 95,7 | 4,3 | 0,5 |
| A5 | 95,7 | 4,3 | 0,25 |
| Vergleich | 95,7 | 4,3 | - |

### Herstellung der Formmassen

Eine Polybutadien(Pbu)dispersion mit einer mittleren Teilchengröße von 85 nm wurde durch Zugabe von Agglomerierlatex (2 Gew.-% fest, bezogen auf den Polybutadienfeststoff) agglomeriert und dann mit Styrol (S) und Acrylnitril (AN) gepfropft. Das Gewichtsverhältnis SAN:Pbu betrug 40:60 und das Gewichtsverhältnis S:AN 70:30. Die Agglomeriermittel waren die vorstehenden Dispersionen aus 95,7 Gew.-% Ethylacrylat (FA) und 4,3 Gew.-% Methacrylamid (MAM), bei deren Herstellung verschiedene Mengen von t-Dodecylmercaptan als Regler verwendet wurden.

Die agglomerierten und gepfropften Dispersionen wurden koaguliert und mit einem Polystryrolacrylonitril(PSAN)-Copolymeren in einem Extruder bei 260°C abgemischt. Das PSAN hat ein S:AN-Gewichtsverhältnis von 67:33 und eine Viskositätszahl von 80 ml/g (gemessen bei 25°C als eine 0,5 %ige Lösung in Dimethylformamid nach DIN 53726). Das Verhältnis gepfropfter Kautschuk:PSAN betrug 28:72 (Gewichtsverhältnis).

Aus diesen Formmassen wurden Izod-Stäbchen bei 260°C und einer Formtemperatur von 60°C gespritzt, und die Kerbschlagzähigkeit (AK) analog ISO 179/1eA und Schlagzähigkeit (AN) nach ISO 179/1eU bei 23°C und -30°C wurden gemessen. Die Ergebnisse sind in Tabelle 2 wiedergegeben.

**Tabelle 2:**

| Beispiel | Latex | AN (23°C) | AN (-30°C) | AK (23°C) | AK (-30°C) |
|---|---|---|---|---|---|
| | | kJ/m2 | | | |
| V1 | Vergleich | 180 | 102 | 22 | 4,9 |
| 2 | A4 | 198 | 106 | n.g. | n.g. |
| 3 | A3 | 200 | n.g. | n.g. | n.g. |
| 4 | A2 1,5 | 223 | 152 | 26 | n.g. |
| 5 | A1 2,0 | 233 | 171 | 26 | 6,2 |
| n.g.: nicht gemessen | | | | | |

## Patentansprüche

1. Verfahren zur Herstellung von thermoplastischen Formmassen durch
a) Polymerisieren von Dienen, C₁₋₁₂-Alkylacrylaten oder Gemischen davon, wobei 0 bis 30 Gew.-% dieser Monomere durch weitere copolymerisierbare Monomere und 0 bis 10 Gew.-% dieser Monomere durch vernetzend wirkende Monomere ersetzt sein können, in wäßriger Emulsion zu einem Kautschuk-Latex mit einer Glasübergangstemperatur von weniger als -10°C,
b) mindestens teilweises Agglomerieren des in a) erhaltenen Kautschuk-Latex durch Zugabe einer Dispersion eines Polymers aus 80 bis 100 Gew.-% C₁₋₁₂-Alkylacrylaten und 0 bis 20 Gew.-% wasserlösliche Polymerisate bildenden Comonomeren, wobei 0 bis 50 Gew.-% dieser Monomere durch weitere copolymerisierbare Monomere ersetzt sein können, als Agglomeriermittel,
c) Polymerisieren von 10 bis 90 Gew.-Teilen Styrol, α-Methylstyrol, (meth)acrylnitril, C₁₋₁₂-Alkylacrylat, C₁₋₆-Alkylmethacrylat oder Gemischen davon, wobei bis zu 30 Gew.-% dieser Monomere durch andere, copolymerisierbare Monomere ersetzt sein können, in Gegenwart von 10 bis 90 Gew.-Teilen des in b) erhaltenen agglomerierten Latex, bezogen auf den Feststoff, in wäßriger Emulsion zu einem Pfropfpolymerisat,
dadurch gekennzeichnet, daß das Agglomeriermittel durch Polymerisation der in b) genannten Monomere in Gegenwart von 0,001 bis 10 Gew.-% eines Molekulargewichtsreglers, bezogen auf die Menge der in b) genannten Monomere, hergestellt wird.

2. Verfahren nach Anspruch 1, dadurch gekennzeichnet, daß
d) 5 bis 70 Gew.-Teile des in c) erhaltenen Pfropfpolymerisats mit 30 bis 95 Gew.-Teilen eines Polymerisats aus Styrol, α-Methylstyrol, Methylmethacrylat, (Meth)acrylnitril, Vinylchlorid oder Gemischen davon, wobei bis zu 30 Gew.-% dieser Monomere durch andere, copolymerisierbare Monomere ersetzt sein können, abgemischt werden.

3. Verfahren nach Anspruch 1 oder 2, dadurch gekennzeichnet, daß der Molekulargewichtsregler ausgewählt ist aus C₁₋₂₀-Mercaptanen und Gemischen davon.

4. Verfahren nach einem der Ansprüche 1 bis 3, dadurch gekennzeichnet, daß das Agglomeriermittcl ein Copolymer aus 80 bis 99,9 Gew.-% C₁₋₄-Alkylacrylaten und 0,1 bis 20 Gew.-% (Meth)acrylamid oder (Meth)acrylsäure ist.

5. Verfahren nach einem der Ansprüche 1 bis 4, dadurch gekennzeichnet, daß das Agglomeriermittel in einer Menge von 0,1 bis 20 Gew.-Teilen auf 100 Gew.-Teile Kautschuk-Latex, bezogen auf die Feststoffe, eingesetzt wird.

6. Verfahren nach einem der Ansprüche 1 bis 5, dadurch gekennzeichnet, daß der Kautschuk in Stufe a) aus 30 bis 100 Gew.-% Butadien und 0 bis 70 Gew.-% C₁₋₈-Alkylacrylaten aufgebaut ist.

7. Verfahren nach einem der Ansprüche 1 bis 6, dadurch gekennzeichnet, daß in Stufe c) ein Gemisch aus Styrol und Acrylnitril in einem Gewichtsverhältnis von 80:20 bis 65:35 eingesetzt wird.

8. Formmasse, erhältlich nach einem Verfahren gemäß einem der Ansprüche 1 bis 7.

9. Verwendung von Formmassen gemäß Anspruch 8 zur Herstellung von Fasern, Folien und Formteilen.

10. Fasern, Folien oder Formteile aus einer Formmasse gemäß Anspruch 8.
